# EUROPEAN PATENT SPECIFICATION

(11) **EP 4 387 157 B1**
(45) Date of publication and mention of the grant of the patent: **25.11.2026**
(21) Application number: 23215227.2
(22) Date of filing: 08.12.2023
(51) Int. Cl.: H04L 9/00, G06F 7/72, H04L 9/08, H04L 9/30, H04L 9/32

(54) **BLINDED SEMI-STATIC ELLIPTIC CURVE DIFFIE-HELLMAN AUTHENTICATION PROTOCOL**
BLINDES, HALBSTATISCHES, ELLIPTISCHES KURVEN-DIFFIE-HELLMAN-AUTHENTIFIZIERUNGSPROTOKOLL
PROTOCOLE D'AUTHENTIFICATION DIFFIE-HELLMAN À COURBE ELLIPTIQUE SEMI-STATIQUE AVEUGLE

(30) Priority: 13.12.2022 US 202218065396
(43) Date of publication of application: 19.06.2024
(73) Proprietor: NXP B.V., 5656 AG Eindhoven (NL)
(72) Inventor: Murray, Bruce, 5656 AG Eindhoven (NL); Lamberger, Mario, 5656 AG Eindhoven (NL)
(74) Representative: Krott, Michel

(56) References cited:
- US-A1- 2012 288 093
- BRAUN M ET AL: "Using Elliptic Curves on RFID Tags", IJCSNS INTERNATIONAL JOURNAL OF COMPUTER SCIENCE AND NETWORK SECURITY, INTERNATIONAL JOURNAL OF COMPUTER SCIENCE AND NETWORK SECURITY (I JCSN S), KR, vol. 8, no. 2, 20 February 2008 (2008-02-20), pages 1 - 9, XP002570770, ISSN: 1738-7906
- MIKE HAMBURG: "Fast and compact elliptic-curve cryptography", IACR, INTERNATIONAL ASSOCIATION FOR CRYPTOLOGIC RESEARCH, vol. 20120603:214112, 1 June 2012 (2012-06-01), pages 1 - 20, XP061006243
- JOOST RENES ET AL: "qDSA: Small and Secure Digital Signatures with Curve-based Diffie-Hellman Key Pairs", vol. 20170910:175120, 2 June 2017 (2017-06-02), pages 1 - 38, XP061023547, Retrieved from the Internet <URL:http://eprint.iacr.org/2017/518.pdf> [retrieved on 20170602]
- JUNFENG FAN ET AL: "State-of-the-art of secure ECC implementations: a survey on known side-channel attacks and countermeasures", HARDWARE-ORIENTED SECURITY AND TRUST (HOST), 2010 IEEE INTERNATIONAL SYMPOSIUM ON, IEEE, PISCATAWAY, NJ, USA, 13 June 2010 (2010-06-13), pages 76 - 87, XP031710164, ISBN: 978-1-4244-7811-8

## Description

### TECHNICAL FIELD

Various exemplary embodiments disclosed herein relate generally to efficient blinded semi-static elliptic curve Diffie-Hellman authentication protocol.

### BACKGROUND

Authentication protocols are a vital building block in virtually every secure system nowadays. In resource constrained environments, design decisions need to be made to achieve the security requirements on the one side while respecting the resource constraints on the other side. The ECDH (Elliptic Curve Diffie Hellman) protocol is a versatile tool with many applications in cryptography. It can for example be used for offline authentication which is an important process in any supply chain and consumables use-case.

### SUMMARY

A summary of various exemplary embodiments is presented below. Some simplifications and omissions may be made in the following summary, which is intended to highlight and introduce some aspects of the various exemplary embodiments, but not to limit the scope of the invention. Detailed descriptions of an exemplary embodiment adequate to allow those of ordinary skill in the art to make and use the inventive concepts will follow in later sections.

Various embodiments relate to a data processing system including instructions embodied in a non-transitory computer readable medium, the instructions for an elliptic curve cryptography authentication method based on an elliptic curve in a processor, the instructions, including: generating, by a verifier, a random challenge *r*; multiplying, by the verifier, the random challenge r by a basepoint *G* to produce *R*; sending an x coordinate of *R* to a prover; receiving an x-coordinate of a first point *P*₁ and a second point *P*₂ from the prover, wherein *P*₁ is based on a random share *q*₁ of the private key *q* of the prover and R, and wherein *P*₂ is based on a random share *q*₂ of the private key *q* and *R*; where *q = q*₁ *- q*₂; finding a point ${P}_{1}^{′}$ on the elliptic curve having an x-coordinate of the first point *P*₁; finding a point ${P}_{2}^{′}$ on the elliptic curve having an x-coordinate of the second point *P*₂; and authenticating the prover when an x-coordinate of one of ( ${P}_{1}^{′} + {P}_{2}^{′}$) and ( ${P}_{1}^{′} - {P}_{2}^{′}$) matches an x-coordinate of *r* · *Q*, wherein Q is a public key of the prover.

Various embodiments are described, further including receiving, by the verifier, the public key *Q* from the prover, where the public key *Q* is authenticated.

Various embodiments are described, further including receiving, by the verifier, the public key *Q* from a third party, where the public key *Q* is authenticated.

Further various embodiments relate to a data processing system including instructions embodied in a non-transitory computer readable medium, the instructions for an elliptic curve cryptography authentication method based on an elliptic curve in a processor, the instructions, including: receiving, by a prover, an x-coordinate of *R*, wherein *R = r* · *G,* where *r* a random challenge generated by a verifier and *G* is a basepoint; generating, by the prover, two shares *q*₁, *q*₂ of the private key *q* of the prover such that *q = q*₁ *- q*₂; calculating *P*₁ *= q*₁ · *R,* calculating *P*₂ = *q*₂ · *R*; and sending an x-coordinate of *P*₁ and an x-coordinate of *P*₂ to the verifier.

Various embodiments are described, further including sending, by the prover, the public key *Q* of the prover, where the public key *Q* is authenticated.

Various embodiments are described, further including sending, by the prover, the public key *Q* to a third party, where the public key *Q* is authenticated.

Further various embodiments relate to an elliptic curve cryptography authentication method based on an elliptic curve, including: generating, by a verifier, a random challenge *r*; multiplying, by the verifier, the random challenge r by a basepoint *G* to produce *R*; sending an x coordinate of *R* to a prover; receiving an x-coordinate of a first point *P*₁ and a second point *P*₂ from the prover, wherein *P*₁ is based on a random share *q*₁ of the private key *q* of the prover and *R*, and wherein *P*₂ is based on a random share *q*₂ of the private key *q* and *R*; where *q = q*₁ *- q*₂; finding a point ${P}_{1}^{′}$ on the elliptic curve having an x-coordinate of the first point *P*₁; finding a point ${P}_{2}^{′}$ on the elliptic curve having an x-coordinate of the second point *P*₂; and authenticating the prover when an x-coordinate of one of ( ${P}_{1}^{′} + {P}_{2}^{′}$) and ( ${P}_{1}^{′} - {P}_{2}^{′}$) matches an x-coordinate of *r* · *Q*, wherein *Q* is a public key of the prover.

Various embodiments are described, further including receiving, by the verifier, the public key *Q* from the prover, where the public key *Q* is authenticated.

Various embodiments are described, further including receiving, by the verifier, the public key *Q* from a third party, where the public key *Q* is authenticated.

Further various embodiments relate to an elliptic curve cryptography authentication method based on an elliptic curve, including: receiving, by a prover, an x-coordinate of *R,* wherein *R = r* · *G,* where *r* a random challenge generated by a verifier and *G* is a basepoint; generating, by the prover, two shares *q*₁, *q*₂ of the private key *q* of the prover such that *q = q*₁ *- q*₂; calculating *P*₁ *= q*₁ · *R,* calculating *P*₂ = *q*₂ · *R*; and sending an x-coordinate of *P*₁ and an x-coordinate of *P*₂ to the verifier.

Various embodiments are described, further including sending, by the prover, the public key *Q* of the prover, where the public key *Q* is authenticated.

Various embodiments are described, further including sending, by the prover, the public key Q to a third party, where the public key *Q* is authenticated.

### BRIEF DESCRIPTION OF THE DRAWINGS

In order to better understand various exemplary embodiments, reference is made to the accompanying drawings, wherein:
FIG. 1 illustrates a graphical description of the ECDH protocol as applied to a reader and a tag; and
FIG. 2 illustrates an exemplary hardware diagram for implementing an authentication protocol.

To facilitate understanding, identical reference numerals have been used to designate elements having substantially the same or similar structure and/or substantially the same or similar function.

### DETAILED DESCRIPTION

The description and drawings illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art and are to be construed as being without limitation to such specifically recited examples and conditions. Additionally, the term, "or," as used herein, refers to a non-exclusive or (*i.e.,* and/or), unless otherwise indicated (*e.g.,* "or else" or "or in the alternative"). Also, the various embodiments described herein are not necessarily mutually exclusive, as some embodiments can be combined with one or more other embodiments to form new embodiments.

Authentication protocols are a vital building block in virtually every secure system nowadays. In resource constrained environments, design decisions need to be made to achieve the security requirements on the one side while respecting the resource constraints on the other side. A modified version of an elliptic curve-based authentication protocol is proposed with the unique feature that under certain security assumptions, the effort spent on the prover side of this protocol can be reduced at the cost of the verifier side. This approach is readily applicable when the prover is even more resource constrained than the verifier, e.g., an RFID tag that wants to authenticate to a reader.

The Elliptic Curve Diffie Hellman (ECDH) protocol is a versatile tool with many applications in cryptography. It can for example be used for offline authentication which is an important process in any supply chain and consumables use-case as well as in other use-cases. The complexity of this problem is usually based on the fact that there are significant resource constraints on the prover side, where chip area and energy consumption are guiding factors. Therefore, an authentication protocol is described herein that takes these resource constraints into account and allows the prover to perform simpler computations while the verifier is performing a few extra steps.

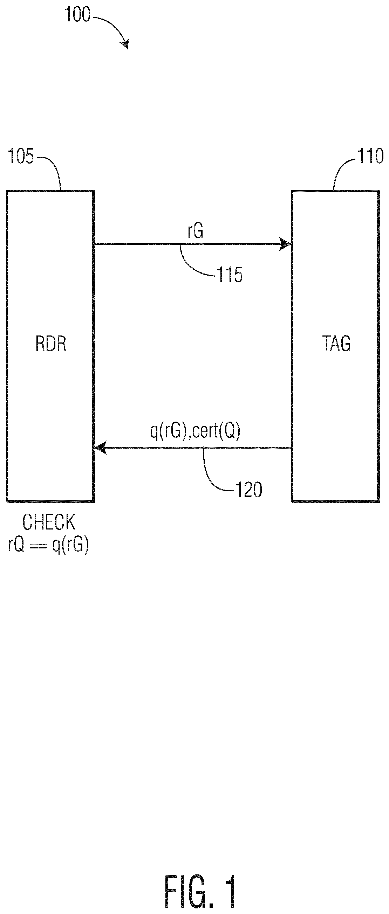

FIG. 1 illustrates a graphical description of the ECDH protocol as applied to a reader and a tag. The reader 105 may act as a verifier, and the tag 110 may act as a prover. The reader 105 randomly generates a value r and multiplies it with a base point *G* to generate challenge point *r* · *G.* The challenge point r · *G* is sent 115 to the tag 110. The tag 110 multiplies the challenge point by its private key *q* to obtain *q*(*rG*) to authenticate itself to the verifier. The tag 110 sends 120 *q*(*rG*) back to the reader 105. The tag 110 may also send a certificate for the tags public key Q associated with its private key q. The reader 105 may verify the tag by multiplying the value r with the tags public key Q. The value *rQ* is then compared to the received *q*(*rG*) value. As *Q = r* · *G*, if *rQ == q*(*rG*) the reader 105 has verified the tag 110.

There are multiple choices that the prover can make in order to implement the elliptic curve scalar multiplication as efficiently as possible. A common method is for example to use a Montgomery-ladder approach with co-Z projective coordinates (i.e., sharing the same Z-coordinate). In such a version of the protocol, one would only take the x-coordinate of the challenge point as input from the verifier and the answer of the prover would also just be the affine x-coordinate of the result or any form of projective coordinate representation, without the y-coordinate. In the description below, the x-coordinate is referenced, and it is intended that this may either be an affine x-coordinate or any form of equivalent projective coordinate representation.

It is a well-known problem, that side-channel analysis (SCA) attacks are a common threat to cryptographic implementations. There is a variety of countermeasures that are proposed to make SCA attacks more difficult. Here, blinding the ECC private key is a common approach and there are multiple proposals to do this.

One way to randomize the ECC private key is by performing an additive split blinding. That means two shares *q*₁, *q*₂ of the ECC private key *q* are created such that *q = q*₁ *- q*₂. This could e.g. be achieved by adding a random number b to q. Then in order to compute *q* · *(rG)* one would compute *P*₁ *= q*₁ · *(rG)* and also *P*₂ *= q*₂ · *(rG)* and then the original result *q(rG)* can be achieved by subtracting the second result from the first: ${P}_{1} - {P}_{2} = {q}_{1} ⋅ \left(rG\right) - {q}_{2} ⋅ \left(rG\right) = q \left(rG\right) .$ This approach has the advantage that the original key q is not touched during the ECC computation. Of course, that comes at the price of doubling the computational effort (two scalar multiplications) and an additional subtraction.

A closer look at the latter subtraction will now be taken. As mentioned before, in highly efficient implementations only the x-coordinate of the input point is used during the computation. For each valid x-coordinate, there are two (except for points of order *h* (cofactor)) y-coordinates that constitute valid points on the elliptic curve. Now, if the prover has to perform the unblinding, i.e., the removal of the randomness from the computation to produce the original result that matches the ECDH protocol, a subtraction has to be performed by the prover. For this, the prover would have to compute a y-coordinate reconstruction which increases the complexity needed on the ECC implementation on the prover side.

In order to avoid this, allowing for ambiguity of the computation on the prover side and resolving this by adding complexity to the verification operation on the verifier side is proposed. Instead of computing the subtraction of the two intermediate results *P*₁ and *P*₂, the prover would just send the x-coordinates of these two points (*P*₁)*ₓ* and (*P*₂)*ₓ* back to the verifier.

The verifier would take these two x-coordinates and reconstruct one corresponding y-coordinate to find points ${P}_{1}^{′}$ and ${P}_{2}^{′}$ with ${\left({P}_{1}^{′}\right)}_{x} = {\left({P}_{1}\right)}_{x}$(*P*₁)*ₓ* and ${\left({P}_{2}^{′}\right)}_{x} = {\left({P}_{2}\right)}_{x}$. Now, with the original challenge r that the verifier sent out, the verifier simply computes the two elementary ECC operations ( ${P}_{1}^{′} + {P}_{2}^{′}$) and ( ${P}_{1}^{′} - {P}_{2}^{′}$) and verifies if the x-coordinate of either of these two points matches the x-coordinate of r · *Q,* i.e., the challenge r times the public key of the prover. This modified ECDH protocol allows for simplified blinded computations on the prover side while only adding little complexity to the verifier and sacrificing one bit of security for allowing the additional ambiguity.

It is desired to use the least intensive implementation choices possible for a blinded semi-static ECDH protocol used for authentication computations. In order to increase security, blinded computations are performed. For this purpose, an embodiment of an authentication protocol that is a modification of the ECDH protocol is proposed such that the verifier side is taking the x-coordinates of the two blinded computations as input. The verifier then reconstructs two points on the elliptic curve that allow the verifier to authenticate the prover based on the prover's public key. This has the benefit of moving complexity from the prover side to the verifier side without compromising security.

An authentication protocol allows a prover to prove to a verifier that it is authentic. There are multiple ways to do this, either based on symmetric or asymmetric cryptography. Usually, due to the extremely limited computational resources that can be achieved by RFID tags and in other applications, the choice is usually symmetric cryptography. This leads to a complex and difficult key management process. Public key cryptography overcomes this problem. If public key cryptography is chosen in such an authentication scenario, efficiency optimized implementations will need to be developed to be implemented using limited computational resources. Also on protocol level, the selection should be as basic as possible in order to avoid unnecessary overhead. Therefore, the straight-forward ECDH protocol as depicted in FIG. 1 is assumed as the authentication protocol. The efficient EC arithmetic discussed above only uses the x-coordinate of the input point to implement the scalar multiplication. The y-coordinate is never used.

The core asset in this authentication protocol is the elliptic curve (EC)-private key that the prover is storing in non-volatile memory. In order to protect this asset, the prover needs to implement several layers of countermeasures. One common countermeasure is to introduce a blinding step in the private key computation, in order to not leak the private key during the EC scalar multiplication via a side-channel attack.

Before returning the final result of such a blinded operation, the prover either needs to unblind the result beforehand or select a blinding method where this is not necessary. This method would especially be costly if the elliptic curve arithmetic is implemented in *GF*(2*ⁿ*) which then needs additional circuitry for integer modular arithmetic. Note however that the authentication protocol disclosed herein is not limited to ECC operations over *GF*(2*ⁿ*) but works over all elliptic curves over finite fields.

Under the assumption that on the prover side a lot of additional complexity for these blinding operations should not be introduced, a method with small hardware costs might be to simply create two additive shares of the private key, *q* + *b* and *b*. An embodiment of an efficient blinded ECDH authentication protocol will now be described. The following set steps are first carried out. A prover T has in its non-volatile memory an elliptic curve key pair, consisting of a private key *q* and a public key *Q = q* · *G* where *G* is the basepoint of the elliptic curve parameter set. The public key may optionally be stored in the form of a public key certificate which is signed by a trusted third party in order to verify the authenticity of the public key. A verifier V also knows the ECC parameters.

Next the following authentication steps are carried out. The verifier V generates a random challenge r and sends the x-coordinate *of R = r* · *G* to the prover *T.* The prover *T* generates two random shares *q*₁, *q*₂ such that *q = q*₁ *- q*₂ and computes the x-coordinates of the points *P*₁ *= q*₁ · *(rG)* and *P*₂ *= q*₂ · (r*G*) , which are denoted by (*P*₁)*ₓ* and (*P*₂)*ₓ*. The prover returns (*P*₁)*ₓ* and (*P*₂)*ₓ* and optionally the certificate of the prover's public key Q to the verifier V.

Then the following verification steps are carried out. If the prover T has transmitted a public key certificate for Q during step, the verifier V can verify the authenticity of the public key certificate of *Q* at any time before the final verification result. The verifier V uses (*P*₁)*ₓ* and (*P*₂)*ₓ* to find points ${P}_{1}^{′}$ and ${P}_{2}^{′}$ on the elliptic curve having these x-coordinates. This leads to reconstructing *P*₁ and -*P*₁ as well as *P*₂ and -*P*₂. Since the verifier V does not have additional information, they cannot decide if they are dealing with *Pᵢ* or -*Pᵢ* for *i* ∈ {1,2}. They may resolve this ambiguity by selecting either *P*₁ or -*P*₁ (same for *P*₂ and -*P*₂) and compute the two auxiliary points *A* = *P*₁ + *P*₂ and *B* = *P*₁ - *P*₂. The verifier *V* now takes the original challenge *r* and checks if either (*r* · *Q*)*ₓ = Aₓ* or *(r* · *Q*)*ₓ = Bₓ* holds. If one of those equations holds, the verifier *V* is assured that *T* possesses a private key *q* corresponding to *Q.* If both, the authenticity of the computations of the previous step by *T* and the authenticity of the public key *Q* (if applicable) are verified, *V* authenticates *T*.

The *y*-coordinate reconstruction may be realized in multiple ways. One possible instantiation would make use of solving a quadratic equation over a finite field. In case of binary field arithmetic in *GF*(2*ⁿ*) there can be other methods based on linear algebra. The authentication protocol embodiment does not depend on a particular choice of method how this reconstruction is done.

Performing complex cryptographic computations in restricted environments (like small RFID tags) can be very challenging. Especially when it comes to public key cryptography, any additional computation results in a significantly increased gate count and/or increased software code size. Therefore, the authentication protocol disclosed herein is targeted to keep things simple on the side of the resource constrained prover while letting the verifier deal with a slight increase in complexity. This allows addition of security on the prover side without the need of unnecessarily increasing the hardware complexity.

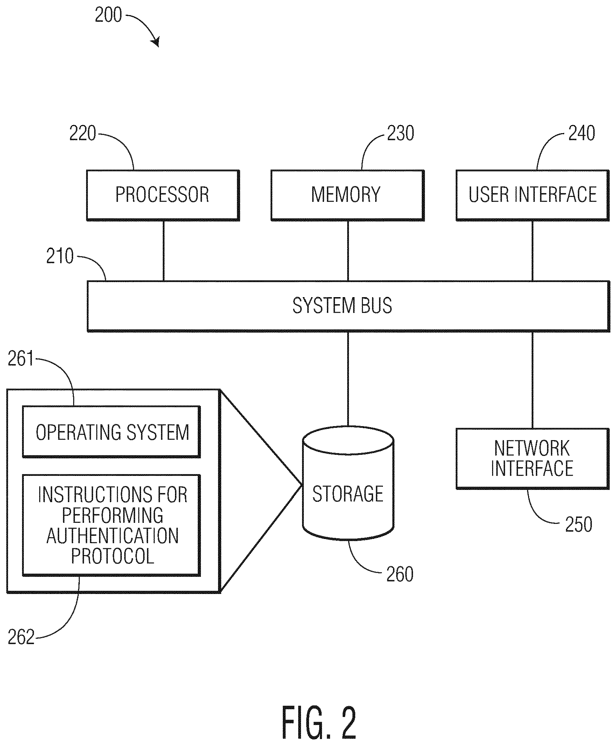

FIG. 2 illustrates an exemplary hardware diagram 200 for implementing an authentication protocol. The exemplary hardware 200 may correspond to either the reader/verifier or the tag/prover of FIG. 1. As shown, the device 200 includes a processor 220, memory 230, user interface 240, network interface 250, and storage 260 interconnected via one or more system buses 210. It will be understood that FIG. 2 constitutes, in some respects, an abstraction and that the actual organization of the components of the device 200 may be more complex than illustrated.

The processor 220 may be any hardware device capable of executing instructions stored in memory 230 or storage 260 or otherwise processing data. As such, the processor may include a microprocessor, microcontroller, graphics processing unit (GPU), neural network processor, field programmable gate array (FPGA), application-specific integrated circuit (ASIC), or other similar devices.

The memory 230 may include various memories such as, for example L1, L2, or L3 cache or system memory. As such, the memory 230 may include static random-access memory (SRAM), dynamic RAM (DRAM), flash memory, read only memory (ROM), or other similar memory devices.

In alternative embodiments, the processor 220 and memory 230 may be replaced by a state machine. This allows for a simpler and efficient hardware design.

The user interface 240 may include one or more devices for enabling communication with a user. For example, the user interface 240 may include a display, a touch interface, a mouse, and/or a keyboard for receiving user commands. In some embodiments, the user interface 240 may include a command line interface or graphical user interface that may be presented to a remote terminal via the network interface 250.

The network interface 250 may include one or more devices for enabling communication with other hardware devices. For example, the network interface 250 may include a network interface card (NIC) configured to communicate according to the Ethernet protocol or other communications protocols, including wireless protocols. Additionally, the network interface 250 may implement a TCP/IP stack for communication according to the TCP/IP protocols. Various alternative or additional hardware or configurations for the network interface 250 will be apparent.

The storage 260 may include one or more machine-readable storage media such as read-only memory (ROM), random-access memory (RAM), magnetic disk storage media, optical storage media, flash-memory devices, or similar storage media. In various embodiments, the storage 260 may store instructions for execution by the processor 220 or data upon with the processor 220 may operate. For example, the storage 260 may store a base operating system 261 for controlling various basic operations of the hardware 200. Storage 260 may include instructions 262 for carrying out the authentication protocol described herein.

It will be apparent that various information described as stored in the storage 260 may be additionally or alternatively stored in the memory 230. In this respect, the memory 230 may also be considered to constitute a "storage device" and the storage 260 may be considered a "memory." Various other arrangements will be apparent. Further, the memory 230 and storage 260 may both be considered to be "non-transitory machine-readable media." As used herein, the term "non-transitory" will be understood to exclude transitory signals but to include all forms of storage, including both volatile and non-volatile memories.

The system bus 210 allows communication between the processor 220, memory 230, user interface 240, storage 260, and network interface 250.

While the host device 200 is shown as including one of each described component, the various components may be duplicated in various embodiments. For example, the processor 220 may include multiple microprocessors that are configured to independently execute the methods described herein or are configured to perform steps or subroutines of the methods described herein such that the multiple processors cooperate to achieve the functionality described herein. Further, where the device 200 is implemented in a cloud computing system, the various hardware components may belong to separate physical systems. For example, the processor 220 may include a first processor in a first server and a second processor in a second server.

As used herein, the term "non-transitory machine-readable storage medium" will be understood to exclude a transitory propagation signal but to include all forms of volatile and non-volatile memory. When software is implemented on a processor, the combination of software and processor becomes a single specific machine. Although the various embodiments have been described in detail, it should be understood that the invention is capable of other embodiments and its details are capable of modifications in various obvious respects.

Because the data processing implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

Any combination of specific software running on a processor to implement the embodiments of the invention, constitute a specific dedicated machine.

It should be appreciated by those skilled in the art that any block diagrams herein represent conceptual views of illustrative circuitry embodying the principles of the invention.

## Claims

1. A data processing system (200) comprising instructions embodied in a non-transitory computer readable medium, the instructions for an elliptic curve cryptography authentication method based on an elliptic curve in a processor, the instructions, comprising:
generating, by a verifier (V), a random challenge r;
multiplying, by the verifier (V), the random challenge r by a basepoint G to produce R;
sending an x coordinate of *R* to a prover (T);
receiving, by the verifier (V), an x-coordinate of a first point *P*₁ and a second point *P*₂ from the prover (T), wherein *P*₁ is based on a random share *q*₁ of a
private key *q* of the prover (T) and R, and wherein *P*₂ is based on a random share *q*₂ of the private key q and R; where *q = q*₁ *- q*₂;
finding a point ${P}_{1}^{′}$ on the elliptic curve having an x-coordinate of the first point *P*₁;
finding a point ${P}_{2}^{′}$ on the elliptic curve having an x-coordinate of the second point *P*₂; and
authenticating the prover (T) when an x-coordinate of one of ( ${P}_{1}^{′} + {P}_{2}^{′}$) and ( ${P}_{1}^{′} - {P}_{2}^{′}$) matches an x-coordinate of r · *Q*, wherein Q is the public key related to the private key q of the prover (T).

2. The data processing system (200) of claim 1, further comprising receiving, by the verifier (V), the public key *Q* from the prover (T), where the public key *Q* is authenticated.

3. The data processing system (200) of claim 1, further comprising receiving, by the verifier (V), the public key *Q* from a third party, where the public key *Q* is authenticated.

4. A data processing system (200) comprising instructions embodied in a non-transitory computer readable medium (230), the instructions for an elliptic curve cryptography authentication method based on an elliptic curve in a processor (220), the instructions, comprising:
receiving, by a prover (T), an x-coordinate of *R*, wherein *R = r* · *G,* where *r* is a random challenge generated by a verifier (V) and *G* is a basepoint;
generating, by the prover (T), two shares *q*₁, *q*₂ of a private key *q* of the prover (T) such that *q = q*₁ *- q*₂;
calculating the x-coordinate of *P*₁ *= q*₁ · *R*,
calculating the x-coordinate of *P*₂ *= q*₂ · *R;* and
sending an x-coordinate of *P*₁ and an x-coordinate of *P*₂ to the verifier (V).

5. The data processing system (200) of claim 4, further comprising sending, by the prover (T), the public key *Q* related to the private key to the verifier (V), where the public key *Q* is authenticated.

6. The data processing system (200) of claim 4, further comprising sending, by the prover (T), the public key related to the private key *Q* to a third party, where the public key *Q* is authenticated.

7. An elliptic curve cryptography authentication method based on an elliptic curve, comprising:
generating, by a verifier (V), a random challenge *r*;
multiplying, by the verifier (V), the random challenge r by a basepoint *G* to produce *R*;
sending an x coordinate of *R* to a prover (T);
receiving an x-coordinate of a first point *P*₁ and a second point *P*₂ from the prover (T), wherein *P*₁ is based on a random share *q*₁ of a
private key *q* of the prover (T) and *R*, and
wherein *P*₂ is based on a random share *q*₂ of the private key *q* and *R*; where *q = q*₁ *- q*₂;
finding a point ${P}_{1}^{′}$ on the elliptic curve having an x-coordinate of the first point *P*₁;
finding a point ${P}_{2}^{′}$ on the elliptic curve having an x-coordinate of the second point *P*₂; and
authenticating the prover (T) when an x-coordinate of one of ( ${P}_{1}^{′} + {P}_{2}^{′}$) and ( ${P}_{1}^{′} - {P}_{2}^{′}$) matches an x-coordinate of *r* · *Q*, wherein Q is the public key related to the private key of the prover (T).

8. The elliptic curve cryptography authentication method of claim 7, further comprising receiving, by the verifier (V), the public key *Q* from the prover (T), where the public key *Q* is authenticated.

9. The elliptic curve cryptography authentication method of claim 7, further comprising receiving, by the verifier (V), the public key *Q* from a third party, where the public key *Q* is authenticated.

10. An elliptic curve cryptography authentication method based on an elliptic curve, comprising:
receiving, by a prover (T), an x-coordinate of *R*, wherein *R = r* · *G,* where r a random challenge generated by a verifier (V) and *G* is a basepoint;
generating, by the prover (T), two shares *q*₁, *q*₂ of a private key *q* of the prover (T) such that *q = q*₁ *- q*₂;
calculating *P*₁ *= q*₁ · *R*,
calculating *P*₂ *= q*₂ · *R;* and
sending an x-coordinate of *P*₁ and an x-coordinate of *P*₂ to the verifier (V).

11. The elliptic curve cryptography authentication method of claim 10, further comprising sending, by the prover (T), the public key *Q* related to the private key to the verifier (V), where the public key *Q* is authenticated.

12. The elliptic curve cryptography authentication method of claim 10, further comprising sending, by the prover (T), the public key *Q* related to the private key of to a third party, where the public key *Q* is authenticated.

## Patentansprüche

1. Datenverarbeitungssystem (200), das Anweisungen umfasst, die in einem nichtflüchtigen computerlesbaren Medium verkörpert sind, wobei die Anweisungen für ein Kryptographie-Authentifizierungsverfahren mit elliptischen Kurven auf einer elliptischen Kurve in einem Prozessor basieren, wobei die Anweisungen Folgendes umfassen:
Erzeugen, durch einen Verifizierer (V), einer Zufallsabfrage r;
Multiplizieren, durch den Verifizierer (V), der Zufallsabfrage r mit einem Basispunkt G, um R zu erzeugen;
Senden einer x-Koordinate von R an einen Prover (T);
Empfangen, durch den Verifizierer (V), einer x-Koordinate eines ersten Punkts P₁ und eines zweiten Punkts P₂ von dem Prover (T), wobei P₁ auf einem zufälligen Anteil q₁ eines privaten Schlüssels q des Provers (T) und R basiert und wobei P₂ auf einem zufälligen Anteil q₂ des privaten Schlüssels q und R basiert; wobei q = q₁ - q₂;
Finden eines Punkts ${P}_{1}^{′}$ auf der elliptischen Kurve mit einer x-Koordinate des ersten Punkts P₁;
Finden eines Punkts ${P}_{2}^{′}$ auf der elliptischen Kurve mit einer x-Koordinate des zweiten Punkts P₂; und
Authentifizieren des Provers (T), wenn eine x-Koordinate von einem von ( ${P}_{1}^{′} + {P}_{2}^{′}$) und ( ${P}_{1}^{′} - {P}_{2}^{′}$) mit einer x-Koordinate von r · Q übereinstimmt, wobei Q ein öffentlicher Schlüssel ist, der mit dem privaten Schlüssel q des Provers (T) in Beziehung steht.

2. Datenverarbeitungssystem (200) nach Anspruch 1, ferner umfassend das Empfangen, durch den Verifizierer (V), des öffentlichen Schlüssels Q von dem Prover (T), wobei der öffentliche Schlüssel Q authentifiziert wird.

3. Datenverarbeitungssystem (200) nach Anspruch 1, ferner umfassend das Empfangen, durch den Verifizierer (V), des öffentlichen Schlüssels Q von einer Drittpartei, wobei der öffentliche Schlüssel Q authentifiziert wird.

4. Datenverarbeitungssystem (200), das Anweisungen umfasst, die in einem nichtflüchtigen computerlesbaren Medium (230) verkörpert sind, wobei die Anweisungen für ein Kryptographie-Authentifizierungsverfahren mit elliptischen Kurven auf einer elliptischen Kurve in einem Prozessor (220) basieren, wobei die Anweisungen Folgendes umfassen:
Empfangen, durch einen Prover (T), einer x-Koordinate von R, wobei R *=* r · G ist, wobei r eine durch einen Verifizierer (V) erzeugte Zufallsaufforderung ist und G ein Basispunkt ist;
Erzeugen, durch den Prover (T), zweier Anteile q₁, q₂ eines privaten Schlüssels q des Provers (T), so dass q = q₁ - q₂;
Berechnen der x-Koordinate von P₁ = q₁ · R,
Berechnen der x-Koordinate von P₂ = q₂ · R; und
Senden einer x-Koordinate von P₁ und einer x-Koordinate von P₂ an den Verifizierer (V).

5. Datenverarbeitungssystem (200) nach Anspruch 4, ferner umfassend das Senden, durch den Prover (T), des öffentlichen Schlüssels Q in Bezug auf den privaten Schlüssel an den Verifizierer (V), wobei der öffentliche Schlüssel Q authentifiziert wird.

6. Datenverarbeitungssystem (200) nach Anspruch 4, das ferner das Senden, durch den Prover (T), des öffentlichen Schlüssels bezüglich des privaten Schlüssels Q an eine Drittpartei umfasst, wo der öffentliche Schlüssel Q authentifiziert wird.

7. Kryptographie-Authentifizierungsverfahren mit elliptischer Kurve basierend auf einer elliptischen Kurve, das Folgendes umfasst:
Erzeugen, durch einen Verifizierer (V), einer Zufallsabfrage r;
Multiplizieren, durch den Verifizierer (V), der Zufallsabfrage r mit einem Basispunkt G, um R zu erzeugen;
Senden einer x-Koordinate von R an einen Prover (T);
Empfangen einer x-Koordinate eines ersten Punkts P₁ und eines zweiten Punkts P₂ vom Prover (T), wobei P₁ auf einem Zufallsanteil q₁ eines privaten Schlüssels q des Provers (T) und R basiert und wobei P₂ auf einem Zufallsanteil q₂ des privaten Schlüssels q und R basiert; wobei q = q₁ - q₂;
Finden eines Punkts ${P}_{1}^{′}$ auf der elliptischen Kurve mit einer x-Koordinate des ersten Punkts P₁;
Finden eines Punkts ${P}_{2}^{′}$ auf der elliptischen Kurve mit einer x-Koordinate des zweiten Punkts P₂; und
Authentifizieren des Provers (T), wenn eine x-Koordinate von einem von ( ${P}_{1}^{′} + {P}_{2}^{′}$) und ( ${P}_{1}^{′} - {P}_{2}^{′}$) mit einer x-Koordinate von r · q übereinstimmt, wobei Q der öffentliche Schlüssel ist, der mit dem privaten Schlüssel des Provers (T) in Beziehung steht.

8. Kryptographie-Authentifizierungsverfahren mit elliptischer Kurve nach Anspruch 7, das ferner das Empfangen des öffentlichen Schlüssels Q von dem Prover (T) durch den Verifizierer (V) umfasst, wobei der öffentliche Schlüssel Q authentifiziert wird.

9. Kryptographie-Authentifizierungsverfahren mit elliptischer Kurve nach Anspruch 7, das ferner das Empfangen, durch den Verifizierer (V), des öffentlichen Schlüssels Q von einer Drittpartei umfasst, wobei der öffentliche Schlüssel Q authentifiziert wird.

10. Kryptographie-Authentifizierungsverfahren mit elliptischer Kurve basierend auf einer elliptischen Kurve, das Folgendes umfasst:
Empfangen, durch einen Prover (T), einer x-Koordinate von R, wobei R *=* r · G ist, wobei r eine durch einen Verifizierer (V) erzeugte Zufallsabfrage ist und G ein Basispunkt ist;
Erzeugen, durch den Prover (T), von zwei Shares q₁, q₂ eines privaten Schlüssels q des Provers (T), so dass q = q₁ - q₂;
Berechnen von P₁ = q₁ · R,
Berechnen von P₂ = q₂ · R; und
Senden einer x-Koordinate von P₁ und einer x-Koordinate von P₂ an den Verifizierer (V).

11. Kryptographie-Authentifizierungsverfahren mit elliptischer Kurve nach Anspruch 10, das ferner das Senden, durch den Prover (T), des öffentlichen Schlüssels Q in Bezug auf den privaten Schlüssel an den Verifizierer (V) umfasst, wobei der öffentliche Schlüssel Q authentifiziert wird.

12. Kryptographie-Authentifizierungsverfahren mit elliptischer Kurve nach Anspruch 10, ferner umfassend das Senden, durch den Prover (T), des öffentlichen Schlüssels Q in Bezug auf den privaten Schlüssel an eine Drittpartei, wo der öffentliche Schlüssel Q authentifiziert wird.

## Revendications

1. Système de traitement de données (200) comprenant des instructions intégrées sur un support non transitoire lisible par ordinateur, les instructions étant destinées à un procédé d'authentification par cryptographie à courbe elliptique basé sur une courbe elliptique, dans un processeur, les instructions comprenant d'exécuter les étapes suivantes :
générer, par un vérificateur (V), un défi aléatoire r ;
multiplier, par le vérificateur (V), le défi aléatoire r par un point de base G pour produire R ;
envoyer une coordonnée x de R à un prouveur (T) ;
recevoir, par le vérificateur (V), une coordonnée x d'un premier point P₁ et d'un deuxième point P₂ en provenance du prouveur (T), où P₁ est basé sur une part aléatoire q₁ d'une clé privée q du prouveur (T) et sur R, et où P₂ est basé sur une part aléatoire q₂ de la clé privée q et sur R ; où q = q₁ - q₂ ;
trouver un point ${P}_{1}^{′}$ sur la courbe elliptique ayant une coordonnée x du premier point P₁ ;
rechercher un point ${P}_{2}^{′}$ sur la courbe elliptique ayant une coordonnée x du deuxième point P₂ ; et
authentifier le prouveur (T) lorsqu'une coordonnée x de l'une parmi ( ${P}_{1}^{′} + {P}_{2}^{′}$) et ( ${P}_{1}^{′} - {P}_{2}^{′}$) correspond à une coordonnée x de r · Q, Q étant une clé publique liée à la clé privée q du prouveur (T).

2. Système de traitement de données (200) selon la revendication 1, comprenant en outre de recevoir, par le vérificateur (V), la clé publique Q en provenance du prouveur (T), où la clé publique Q est authentifiée.

3. Système de traitement de données (200) selon la revendication 1, comprenant en outre de recevoir, par le vérificateur (V), la clé publique Q d'un tiers, où la clé publique Q est authentifiée.

4. Système de traitement de données (200) comprenant des instructions intégrées sur un support non transitoire lisible par ordinateur (230), les instructions étant destinées à un procédé d'authentification par cryptographie à courbe elliptique basé sur une courbe elliptique, dans un processeur (220), les instructions comprenant d'exécuter les étapes suivantes :
recevoir, par un prouveur (T), une coordonnée x de R, où R *=* r · G, où r est un défi aléatoire généré par un vérificateur (V) et G est un point de base ;
générer, par le prouveur (T), deux parts q₁, q₂ d'une clé privée q du prouveur (T) telle que q = q₁ - q₂ ;
calculer la coordonnée x de P₁ = q₁ · R,
calculer la coordonnée x de P₂ = q₂ · R ; et
envoyer une coordonnée x de P₁ et une coordonnée x de P₂ au vérificateur (V).

5. Système de traitement de données (200) selon la revendication 4, comprenant en outre d'envoyer, par le prouveur (T), la clé publique Q associée à la clé privée au vérificateur (V), où la clé publique Q est authentifiée.

6. Système de traitement de données (200) selon la revendication 4, comprenant en outre d'envoyer, par le prouveur (T), la clé publique associée à la clé privée Q à un tiers, où la clé publique Q est authentifiée.

7. Procédé d'authentification par cryptographie à courbe elliptique basé sur une courbe elliptique, comprenant les étapes suivantes :
générer, par un vérificateur (V), un défi aléatoire r ;
multiplier, par le vérificateur (V), le défi aléatoire r par un point de base G pour produire R ;
envoyer une coordonnée x de R à un prouveur (T) ;
recevoir une coordonnée x d'un premier point P₁ et d'un deuxième point P₂ en provenance du prouveur (T), où P₁ est basé sur une part aléatoire q₁ d'une clé privée q du prouveur (T) et sur R, et où P₂ est basé sur une part aléatoire q₂ de la clé privée q et sur R ; où q = q₁ - q₂ ;
trouver un point ${P}_{1}^{′}$ sur la courbe elliptique ayant une coordonnée x du premier point P₁ ;
rechercher un point ${P}_{2}^{′}$ sur la courbe elliptique ayant une coordonnée x du deuxième point P₂ ; et
authentifier le prouveur (T) lorsqu'une coordonnée x de l'une parmi ( ${P}_{1}^{′} + {P}_{2}^{′}$) **et** ( ${P}_{1}^{′} - {P}_{2}^{′}$) correspond à une coordonnée x de r · q, Q étant une clé publique liée à la clé privée du prouveur (T).

8. Procédé d'authentification par cryptographie à courbe elliptique selon la revendication 7, comprenant en outre de recevoir, par le vérificateur (V), la clé publique Q en provenance du prouveur (T), où la clé publique Q est authentifiée.

9. Procédé d'authentification par cryptographie à courbe elliptique selon la revendication 7, comprenant en outre de recevoir, par le vérificateur (V), la clé publique Q en provenance d'un tiers, où la clé publique Q est authentifiée.

10. Procédé d'authentification par cryptographie à courbe elliptique basé sur une courbe elliptique, comprenant les étapes suivantes :
recevoir, par un prouveur (T), une coordonnée x de R, où R *=* r · G, où r est un défi aléatoire généré par un vérificateur (V) et G est un point de base ;
générer, par le prouveur (T), deux parts q₁, q₂ d'une clé privée q du prouveur (T) telle que q = q₁ - q₂ ;
calculer P₁ = q₁ · R,
calculer P₂ = q₂ · R ; et
envoyer une coordonnée x de P₁ et une coordonnée x de P₂ au vérificateur (V).

11. Procédé d'authentification par cryptographie à courbe elliptique selon la revendication 10, comprenant en outre d'envoyer, par le prouveur (T), la clé publique Q associée à la clé privée au vérificateur (V), où la clé publique Q est authentifiée.

12. Procédé d'authentification par cryptographie à courbe elliptique selon la revendication 10, comprenant en outre d'envoyer, par le prouveur (T), la clé publique Q associée à la clé privée à un tiers, où la clé publique Q est authentifiée.
